# FASCICULE DE BREVET EUROPEEN

(11) **EP 2 618 960 B1**
(45) Date de publication et mention de la délivrance du brevet: **14.01.2015**
(21) Numéro de dépôt: 11768067.8
(22) Date de dépôt: 23.09.2011
(51) Int. Cl.: B23K 37/053, B23Q 3/18, F16L 1/10, G01B 21/24

(54) **PROCEDE ET DISPOSITIF DE POSITIONNEMENT MUTUEL DE TUBES AVEC PLURALITE DE MESURES GEOMETRIQUES**
VERFAHREN UND VORRICHTUNG ZUR GEGENSEITIGEN POSITIONIERUNG VON ROHRLEITUNGEN MIT MEHREREN GEOMETRISCHEN MESSUNGEN
METHOD AND DEVICE FOR THE MUTUAL POSITIONING OF PIPES WITH A PLURALITY OF GEOMETRIC MEASUREMENTS

(30) Priorité: 24.09.2010 FR 1057723
(43) Date de publication de la demande: 31.07.2013
(73) Titulaire: Serimax, 77290 Mitry-Mory (FR)
(72) Inventeur: DAGENAIS, Jean-François, F--13260 Cassis (FR)
(74) Mandataire: Marsolais, Richard
(86) Numéro de dépôt international: PCT/FR2011/000524
(87) Numéro de publication internationale: WO 2012/038625

(56) Documents cités:
- WO-A1-01/34340
- WO-A1-2006/112689
- JP-A- 2009 291 836
- US-A- 4 565 003
- US-A1- 2005 133 564

## Description

L'invention se rapporte de manière générale à un procédé de positionnement mutuel de tubes les uns par rapport aux autres et d'un dipositif de mise en oeuvre de ce procédé conformément au préambule des revendications 1 et 8 (voir, par example, JP 2009/291 836). Plus précisément, il s'agit de mettre bout à bout des tubes en vue de les souder les uns aux autres par leurs extrémités.

On aligne généralement les tubes les uns par rapport aux autres, puis on les bloque les uns contre les autres afin de les maintenir dans une position optimale, qui permet de les souder ensemble, bout à bout.

Il est connu d'utiliser un anneau portant des vérins à vis régulièrement répartis sur sa circonférence que l'on place autour de la surface extérieure, ou paroi, d'un tube, par exemple métallique. L'anneau comprend deux demi-anneaux reliés entre eux par une articulation de type charnière. Ils peuvent ainsi être écartés l'un de l'autre afin de placer le tube dans la partie centrale de l'anneau, ou de l'en retirer. En position fermée, les deux demi-anneaux forment un anneau qui entoure un tube ou deux au voisinage de leurs extrémités. Les vérins à vis permettent de conformer la zone d'extrémité de l'un des tubes et/ou de déplacer ce tube par rapport à l'autre de manière à aligner ces tubes au mieux. Généralement, l'alignement consiste alors à centrer les sections d'extrémités des tubes l'une par rapport à l'autre.

Le vissage mécanique permet d'exercer des pressions pratiquement ponctuelles en autant de zones qu'il existe de vérins autour du tube. Ceci permet de conformer le tube, par exemple de mettre au rond une portion de ce tube initialement ovoïde.

Lorsqu'il s'agit de souder des tubes les uns aux autres, bout à bout, l'anneau en question permet de serrer et de maintenir en position un tube par rapport à un autre tube, et de le déformer, afin d'obtenir une meilleure coïncidence du profil de son extrémité à celui du tube adjacent. Lorsque la portion d'extrémité de chaque tube est équipée d'un tel anneau, une adéquation plus fine des surfaces terminales est obtenue. Ainsi un meilleur soudage peut être réalisé.

Plus récemment, des publications traitent du positionnement et du maintien en position de tubes l'un par rapport à l'autre en vue de les souder par leurs extrémités.

Ainsi, on connaît du document WO 01/34340 un dispositif comprenant un cadre rigide qui vient serrer la paroi extérieure d'un premier tube grâce à un premier ensemble de serrage et la paroi extérieure d'un second tube grâce à un second ensemble de serrage. Le soudage bout à bout des deux tubes peut ainsi être réalisé. Ensuite, le dispositif peut être déplacé par glissement sur la paroi extérieure de l'un des tubes en direction de son autre extrémité, où une autre soudure doit être réalisée.

Ce dispositif ne permet qu'un positionnement relatif des tubes à souder assez grossier. Seule la forme générale et le diamètre extérieur de l'un des tubes sont pris en compte pour ajuster son positionnement et son serrage par rapport à l'autre tube.

En matière de soudage, il est nécessaire d'avoir d'excellentes surfaces de contact entre les extrémités de chaque tube, en ce que l'on appelle le plan de joint. Dit autrement, il est nécessaire d'avoir une surface de contact importante, voire maximale, pour faciliter le soudage. Cette problématique est absente de l'art antérieur qui ne cherche qu'à obtenir une coïncidence des diamètres extérieurs des tubes à souder. Dit autrement, l'art antérieur cherche à aligner les surfaces extérieures des tubes à souder ensemble.

L'invention cherche à améliorer l'adéquation des surfaces de contact des tubes à souder, en leur plan de joint lors du positionnement.

L'invention vise à remédier aux inconvénients de l'état de la technique et notamment à améliorer le positionnement et le serrage de tubes mis bout à bout.

Pour ce faire, on propose un procédé de positionnement mutuel d'un premier tube et d'un second tube conformément à la revendication 1, dans lequel on utilise un premier ensemble de vérins répartis autour du premier tube et un second ensemble de vérins répartis autour du second tube. Les vérins du premier ensemble et du second ensemble peuvent être commandés indépendamment les uns des autres. Une pluralité de mesures géométriques de diamètre intérieur et d'épaisseur et/ou de diamètre extérieur ayant été préalablement réalisées au voisinage des extrémités de chacun du premier et du second tube, on pilote les vérins du premier ensemble et les vérins du second ensemble de manière conjointe jusqu'à une position relative déterminée à l'aide de certaines au moins des mesures géométriques de manière que les surfaces intérieures des premier et second tubes soient positionnées en concordance mutuelle au voisinage des extrémités respectives de ces tubes. Dans un cas particulier, ces surfaces intérieures d'extrémité sont mutuellement alignées.

Ce procédé, basé sur la connaissance de la géométrie des tubes et sur l'alignement de ces tubes sur leurs surfaces intérieures d'extrémités respectives, permet d'améliorer notablement la qualité des soudures. Un tel positionnement, ou ajustement, mutuel permet de faire coïncider les fonds de chanfreins, plus précisément la surface intérieure des chanfreins, qui forment la base de la soudure.

Les tubes à souder présentent souvent des formes variables et des tolérances de dimensionnement très larges, de sorte qu'en cherchant à positionner globalement les tubes l'un par rapport à l'autre, les surfaces de contact de leurs surfaces intérieures d'extrémités respectives ne coïncident généralement pas correctement. Il en résulte des soudures qui présentent des défauts tout à fait dommageables. Cela induit notamment un surcoût dans le contrôle qualité, des taux de rebut importants, et, en exploitation, de sévères problèmes de réparation.

On peut commander chaque vérin pour réaliser une approche de la surface extérieure en utilisant un capteur de déplacement. Cette approche est alors contrôlée. Les vérins ne sont pas nécessairement synchronisés durant cette phase d'approche.

Certains au moins des vérins peuvent être commandés de manière à assurer un serrage sur la surface extérieure du premier ou du second tube grâce à au moins un moyen interne à chaque vérin, de façon à réguler la pression de serrage sur ladite surface extérieure. Durant cette phase serrage, les vérins sont préférentiellement synchronisés entre eux, de façon à réaliser un serrage général sélectif et performant du premier et/ou du second tube.

Certaines au moins des mesures géométriques peuvent être réalisées par rapport à un marquage formant référence angulaire. On mesure alors un décalage angulaire dudit marquage de chacun du premier et du second tube par rapport à un plan de référence-machine, avant de piloter chaque vérin individuellement en fonction de ces décalages angulaires.

Le plan de référence-machine est un plan déterminé par le constructeur de la machine.

L'alignement est le but visé par le procédé selon l'invention. Il importe que l'alignement final, à défaut d'être parfait, soit le meilleur possible.

Ce procédé prévoit préférentiellement une première étape qui est indépendante et préalable dans le temps à l'étape de positionnement et de serrage. On constitue dans cette étape une base de données relative à la géométrie des tubes. Au moment de positionner les tubes l'un par rapport à l'autre, ces données sont exploitées et servent pour la commande et le contrôle des vérins lors de l'étape de positionnement et de serrage en elle-même.

Selon un mode préféré de réalisation de l'invention, on utilise des vérins hydrauliques. Des vérins électriques peuvent également être utilisés sans sortir du cadre de l'invention.

Les positions relatives des vérins peuvent être déterminées sur la base d'un calcul des diamètres extérieurs à partir de mesures de diamètres intérieurs et d'épaisseurs correspondantes.

On propose également un dispositif pour la mise en oeuvre du procédé proposé conformément à la revendication 8, comprenant plusieurs vérins montés sur des flasques annulaires et orientés radialement par rapport à ceux-ci, et un automate programmable apte à mémoriser des mesures géométriques relatives à des mesures dimensionnelles et/ou de positionnement d'un premier et d'un deuxième tube, l'automate étant programmé pour commander les déplacements de chacun desdits vérins de telle sorte qu'une mise en concordance mutuelle des surfaces intérieures desdits tubes soit réalisée au voisinage de leurs extrémités respectives.

D'autres caractéristiques, détails et avantages de l'invention ressortiront à la lecture de la description qui suit, en faisant référence aux figures annexées, sur lesquelles :

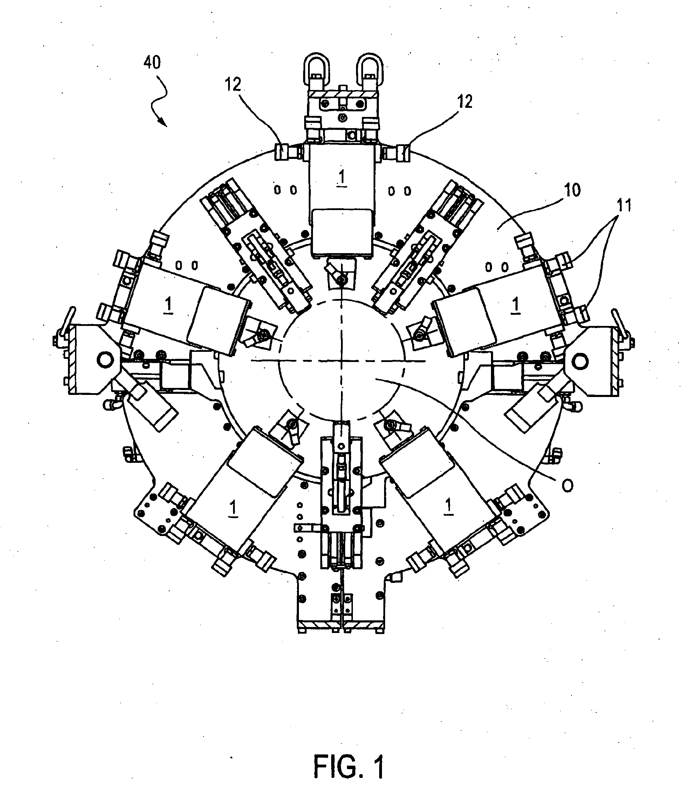

- la figure 1 est une vue de face d'un dispositif de bridage selon l'invention;
- la figure 2 est une vue en perspective isométrique du dispositif de la figure 1 selon un premier angle de vue;
- la figure 3 est une vue analogue à la figure 2, selon un second angle de vue.

Pour plus de clarté, les éléments identiques ou similaires sont repérés par des signes de référence identiques sur l'ensemble des figures.

Les figures montrent un dispositif de bridage, ou bride 40. Cinq vérins 1, ici de type hydraulique, sont montés sur un premier flasque annulaire 10, ou anneau, destiné à être disposé à peu près concentriquement autour d'un premier tube 0 qui doit être positionné par rapport à un second tube, non représenté, et maintenu par rapport à ce dernier en vue de réaliser une soudure, ici annulaire.

Le nombre de vérins peut varier en fonction de contraintes techniques, telles que, notamment, l'encombrement, les efforts mis enjeu, ou le coût.

Préférentiellement, en particulier pour des applications de soudage off-shore, on choisit des vérins hydrauliques renforcés, qui peuvent supporter sur leur tige un effort radial de l'ordre de 20 % de leur capacité totale (effort longitudinal). Dans ce type d'application en effet, durant le soudage, les efforts de traction appliqués sur les tubes peuvent être considérables. Ils sont couramment de l'ordre de plusieurs centaines de tonnes. Les mouvements relatifs des tubes peuvent également être importants. Le dispositif selon l'invention est opérationnel et fiable malgré ces conditions d'exploitation difficiles.

Ici, les vérins sont à double effet. Ils sont préférentiellement couplés à un flexible (non représenté) par un raccord tel qu'un raccord rapide.

Chaque vérin 1 présente un capteur de déplacement interne (non visible) relié à une unité centrale de commande et de traitement. Des électrovannes coopèrent individuellement avec chaque vérin 1 de façon à fournir une pression adaptée et contrôlée.

Un premier ensemble de vérins 1, ici au nombre de cinq, est fixé sur un premier flasque, ou support, annulaire 10, tandis qu'un second ensemble de vérins 2, ici au nombre de cinq, est fixé sur un deuxième flasque annulaire 20. Le premier flasque 10 et le second flasque 20 sont disposés en regard l'un de l'autre, de manière sensiblement concentrique. Ils sont maintenus fixement dans cette position relative par des pièces de liaison, ou traverses 4. Chaque vérin du premier ensemble 1 se trouve en regard d'un vérin du second ensemble 2, ou vérin homologue, et réciproquement. Le premier ensemble de vérins 1 et le second ensemble de vérins 2 sont destinés à être disposés au droit du premier tube et du second tube à souder, à proximité de leurs extrémités voisines. Dit autrement, les vérins du premier ensemble sont répartis autour du premier tube tandis que les vérins du second ensemble sons répartis autour du second tube.

Des plaques de renfort 3 sont ici fixées sur le premier flasque 10 et/ou le second flasque 20, à chaque fois au droit des vérins du premier ensemble 1 et/ou du second ensemble 2. Cela permet de rigidifier les flasques. Le nombre, les dimensions, la constitution des plaques de renfort 3 peuvent varier en fonction du type d'efforts exercés sur la structure.

Chaque vérin présente deux entrées 11 et deux sorties 12, l'une au moins des entrées 11 et l'une au moins des sorties 12 étant à relier à une conduite flexible supportant une pression de 300 à 800 bars, par exemple par un connecteur rapide.

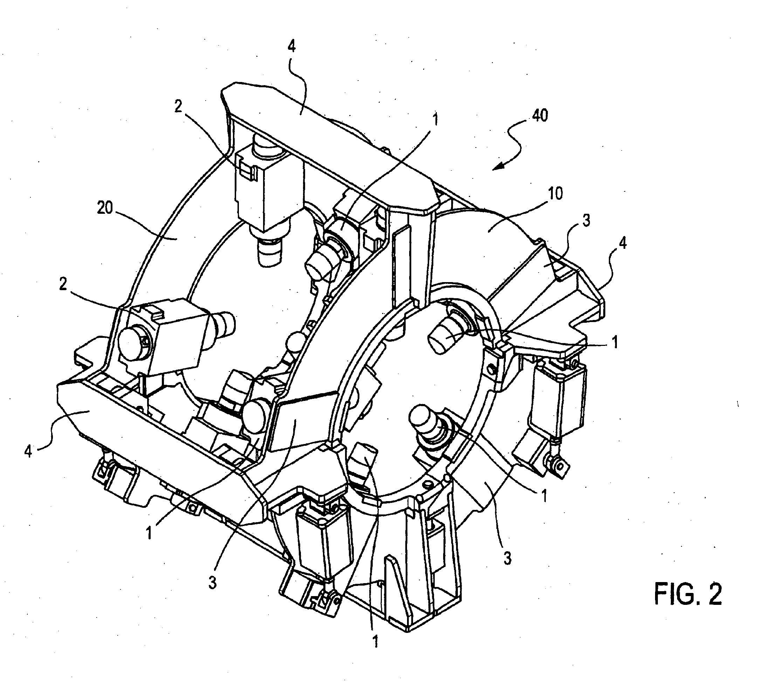

Un dispositif conforme à celui de la figure 2 a été réalisé par la Demanderesse : sur chaque flasque 10, 20, cinq vérins hydrauliques ont été fixés. Chaque vérin travaille sous une pression de 300 à 800 bars, présente une capacité de poussée, selon son axe longitudinal, de 5 à 50 tonnes, une capacité de traction, radialement à son axe longitudinal, de 1 à 10 tonnes et une course de 30 à 100 mm. Chaque vérin comprend un capteur interne de déplacement qui présente une précision de 0,05 mm et une résolution de 0,05. Le capteur de déplacement a été relié à une unité de traitement et de commande, un microcalculateur ou automate programmable de marque commerciale Allen Bradley, de la famille Control Logic.

L'invention concerne en outre un procédé de positionnement mutuel et de maintien d'un premier tube et d'un second tube en vue de les assembler par soudage, en leurs faces d'extrémités. Le procédé utilise ici le dispositif qui vient d'être décrit.

Pour chacun du premier et du second tube, on acquiert un ensemble de caractéristiques géométriques. Ces caractéristiques géométriques comprennent une ou plusieurs valeurs de diamètre intérieur, une ou plusieurs valeurs de diamètre extérieur, une ou plusieurs valeurs d'épaisseur, et/ou des valeurs d'ovalisation. Les valeurs acquises sont mémorisées dans l'unité centrale de traitement.

Avantageusement, les valeurs sont repérées angulairement. Pour ce faire, une marque peut être apposée au voisinage de la face d'extrémité de chaque tube, par exemple selon son épaisseur, pour former de repère angulaire, à partir duquel sont repérées les mesures des caractéristiques géométriques. Ce repère angulaire peut être désigné référence "0". Pour cette étape de mesure des caractéristiques géométriques des tubes, un équipement spécifique, indépendant du dispositif de positionnement, peut être prévu, par exemple du type commercialisé par la société OMS (nom commercial). Plusieurs relevés sont ainsi réalisés, chacun caractérisant la géométrie d'un tube.

Pour le positionnement des tubes, in situ, on présente l'extrémité d'un premier tube au premier flasque 10. Les patins de serrage placés aux extrémités de chacun des vérins 1 sont éloignés de la surface extérieure du premier tube, par exemple situés à une distance donnée d'un diamètre extérieur déterminé du premier tube. Ces valeurs de diamètre extérieur sont telles que le premier flasque soit centré par rapport au premier tube. Ce centrage concerne soit le diamètre intérieur, soit le diamètre extérieur. Ces valeurs sont calculées à partir des valeurs de mesures géométriques réalisées sur le premier tube. Avantageusement, on commande les vérins du premier ensemble 1 de manière à serrer le premier tube. On repère une valeur de décalage angulaire du premier tube, en fait de son repère, par rapport à un plan de référence du dispositif. Ce plan est défini par le constructeur du dispositif, si besoin de manière arbitraire.

On présente ensuite le second tube au second flasque 20. Les patins de serrage placés aux extrémités des vérins 2 sont éloignés de la surface extérieure du second tube. On repère un décalage angulaire du deuxième tube, en fait de son repère, par rapport au plan de référence du dispositif d'aide au positionnement. Les décalages angulaires du premier tube et du second tube sont enregistrés dans l'unité centrale, soit par l'opérateur lui-même, soit automatiquement.

On rapproche alors les patins de la surface extérieure du deuxième tube par actionnement des vérins, jusqu'à atteindre le voisinage d'une valeur de diamètre déterminée de manière que la surface intérieure, ou diamètre intérieur, du second tube soit alignée avec celle du premier tube.

Les patins sont approchés de la paroi extérieure des tubes de façon non nécessairement synchronisée. Cette approche peut se faire rapidement, par exemple à une vitesse inférieure à 6mm/s. La pression des vérins est ici comprise entre 50 et 400 bars. On amène les patins de manière qu'ils se positionnent sur des diamètres théoriques, déduits des mesures acquises, légèrement supérieurs aux valeurs de diamètres extérieurs cibles, par exemple de quelques millimètres.

Les valeurs de diamètre cibles, ou théoriques, pour les vérins du premier ensemble et des vérins du second ensemble sont calculées de manière relative, les uns par rapport aux autres, de manière que ces diamètres cibles correspondent à un alignement des surfaces intérieures au voisinage des extrémités des tubes à abouter.

Par alignement des surfaces intérieures, on entend principalement une mise en concordance de ces surfaces, au moins au voisinage des extrémités du premier et du second tube. De fait, un alignement parfait est très compliqué à obtenir en raison des défauts de forme des tubes. En pratique, on s'attache ici à ce que les critères suivants soient vérifiés, et, le cas échéant maximisés :
- un maximum de surface de contact entre les faces d'extrémité des tubes au plan de joint;
- une surface de contact continue sur la périphérie des faces d'extrémité des tubes;
- ou, à défaut, un écart minimal entre les parois intérieures des tubes à abouter.

Les vérins sont ensuite commandés en mode synchronisé, depuis cette position d'approche. Ce déplacement peut se faire à vitesse très faible, par exemple comprise entre 0,2 et 1 mm/s. Ceci permet d'avoir une bonne précision de positionnement final, typiquement de l'ordre de 0,1 mm.

La vitesse de déplacement des vérins est ajustable en fonction du cas d'espèce. De même la pression finale sur chaque vérin est un paramètre ajustable. On peut combiner ces deux paramètres afin d'affiner le serrage du premier et du deuxième tube.

Le serrage est considéré comme terminé lorsqu'une pression et/ou une course donnée est atteinte au niveau de chacun des vérins.

De préférence, le début du serrage est commandé selon les données des capteurs de déplacement tandis que le réglage final et précis du serrage peut être opéré en fonction de la pression appliquée par chacun des vérins sur la paroi extérieure des tubes à souder ultérieurement.

L'unité de calcul, de traitement et de pilotage, lorsqu'elle comprend des données géométriques sur les tubes, permet un positionnement des tubes par rapport à leurs surfaces intérieures d'extrémités respectives, depuis les surfaces extérieures de ces tubes. Dans le cas de tubes cylindriques, on parle de diamètres intérieurs.

Cet alignement est décisif pour réaliser une soudure de haute qualité : le fond du chanfrein qui constitue la base de la soudure est optimisé. En effet pour réaliser une soudure exempte ou quasi exempte de défauts, il est nécessaire de minimiser les décalages au niveau des surfaces intérieures d'extrémité de chacun des tubes placés en vis-à-vis. La présente invention permet d'atteindre un tel objectif. C'est en ce sens qu'il faut comprendre "l'alignement des surfaces intérieures d'extrémité".

En outre une calibration est opérée grâce à un tube étalon qui permet d'étalonner l'équipement en fonction de la surface extérieure d'un tube déterminé et parfaitement connu.

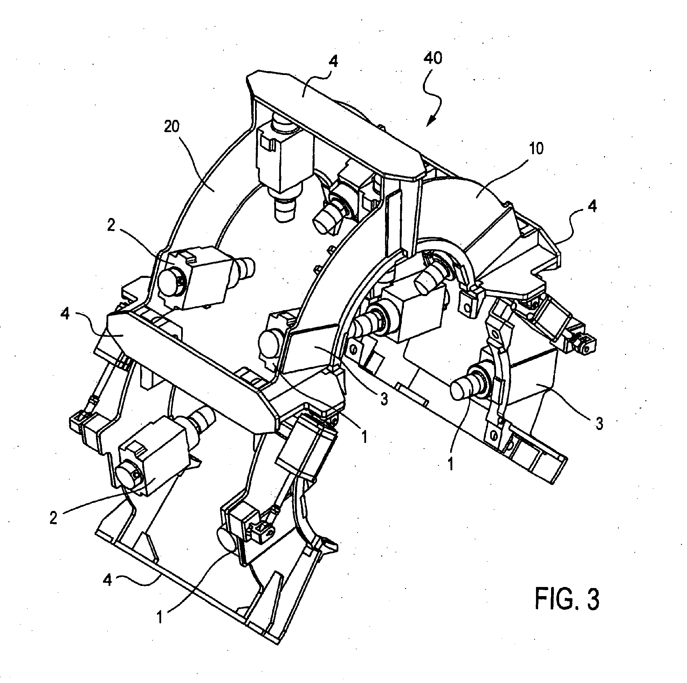

La figure 3 montre en perspective un dispositif selon l'invention, en position ouverte. Cette position permet de placer aisément et grossièrement le premier et le deuxième tube en vis-à-vis, et le dispositif au plus près du plan de joint entre les tubes ainsi placés. Ensuite, un tel dispositif est apte à se refermer et entourer lesdits tubes, selon la figure 2.

Ces faces d'extrémité sont préalablement usinées.

On vient de décrire un procédé qui permet l'alignement des surfaces intérieures au voisinage de leur extrémité de tubes à abouter à partir d'un positionnement relatif de leurs surfaces extérieures. Ce procédé implique de connaître la position angulaire des tubes l'un par rapport à l'autre. On peut voir le procédé comme un moyen d'obtenir le meilleur alignement des surfaces intérieures pour une position angulaire relative imposée. Cette position angulaire relative peut également être déterminée, par exemple à partir des données de mesures géométriques, de manière à offrir les meilleures possibilités d'alignement de ces surfaces intérieures.

D'une certaine manière le procédé que l'on vient de décrire peut être vu comme un procédé de positionnement axial d'un premier tube vis-à-vis d'un deuxième tube en vue du soudage desdits tubes au niveau de leurs d'extrémités dont les faces sont préalablement usinées et définissent un plan de joint, selon lequel on utilise une pluralité de vérins répartis autour du premier et du deuxième tube, lesdits vérins étant reliés à une unité centrale de traitement et de commande, caractérisé en ce qu'à proximité immédiate de la surface extérieure du premier et/ou du deuxième tube on pilote le mouvement de chacun des vérins vis-à-vis de ladite surface extérieure de façon à réaliser un alignement et un centrage des surfaces intérieures d'extrémité du premier et du deuxième tube.

À proximité immédiate de la surface extérieure du premier et du second tube, on pilote le déplacement des vérins du premier ensemble vis-à-vis de la surface extérieure du premier tube et le déplacement des vérins du second ensemble vis-à-vis de la surface extérieure du second tube de façon à réaliser un alignement des surfaces intérieures d'extrémité des ces tubes.

Par "proximité immédiate", on entend ici une distance de l'ordre de quelques millimètres entre l'extrémité d'un vérin, ou du patin qu'il porte, et la surface extérieure d'un tube. Par "surface intérieure d'extrémité", on entend la paroi ou la surface intérieure du premier ou du second tube, au voisinage de son extrémité en vis-à-vis de l'extrémité de l'autre, premier ou second, tube. La distance mesurée selon l'axe longitudinal des vérins est de l'ordre de quelques millimètres.

Optionnellement, les caractéristiques suivantes sont alors susceptibles de s'appliquer :
- Chaque vérin permet de réaliser une première approche de la surface extérieure grâce à un moyen spécifique tel qu'un capteur de déplacement relié à ladite unité centrale de traitement.
- Tout ou partie des vérins assure un serrage sur la surface extérieure du premier et/ou du deuxième tube grâce à au moins un moyen interne à chaque vérin, de façon à réguler la pression de serrage sur ladite surface extérieure.
- Préalablement au positionnement des tubes, on réalise des mesures géométriques d'un ensemble de tubes et un marquage angulaire de référence à l'extrémité desdits tubes ,on mémorise lesdites mesures dans l'unité centrale puis in situ on mesure et on mémorise le décalage angulaire de chaque extrémité du premier et du deuxième tube selon un plan de référence-machine, puis l'unité de calcul détermine et permet de piloter chaque vérin individuellement en fonction du décalage, de façon à aligner les surfaces intérieures d'extrémité du premier et du deuxième tube.
- On utilise des vérins hydrauliques, et ou électriques.

Le dispositif décrit peut également être vu comme un dispositif de positionnement axial d'un premier tube vis-à-vis d'un deuxième tube en vue de les souder bout à bout au niveau d'un plan de joint, comprenant plusieurs vérins orientés radialement et disposés à l'extérieur desdits tubes et à proximité dudit plan de joint, aptes à serrer et positionner chaque tube vis-à-vis de l'autre tube, et un automate programmable apte à mémoriser des données géométriques relatives à des mesures dimensionnelles et/ou de positionnement du premier et/ou du deuxième tube, dans lequel les déplacements de chacun desdits vérins sont pilotés par ledit automate programmable de telle sorte qu'un alignement desdits tubes est réalisé, basé sur un centrage desdits tubes et un alignement de leurs surfaces intérieures d'extrémité respectives.

## Revendications

1. Procédé de positionnement mutuel d'un premier tube et d'un second tube, dans lequel on utilise un premier ensemble de vérins (1) répartis autour du premier tube et un second ensemble de vérins (2) répartis autour du second tube, les vérins (1,2) du premier ensemble et du second ensemble pouvant être commandés indépendamment les uns des autres, **caractérisé en ce que**, une pluralité de mesures géométriques de diamètre intérieur et d'épaisseur et/ou de diamètre extérieur ayant été préalablement réalisées au voisinage des extrémités de chacun du premier et du second tube, on pilote conjointement les vérins (1) du premier ensemble et les vérins (2) du second jusqu'à une position relative déterminée à l'aide de certaines au moins des mesures géométriques de manière que les surfaces intérieures des premier et second tubes soient positionnées en concordance mutuelle au voisinage des extrémités respectives de ces tubes.

2. Procédé selon la revendication 1, dans lequel on commande chaque vérin (1,2) pour réaliser une approche de la surface extérieure en utilisant un capteur de déplacement.

3. Procédé selon l'une des revendications 1 et 2, dans lequel certains au moins des vérins (1,2) sont commandés de manière à assurer un serrage sur la surface extérieure du premier ou du second tube grâce à au moins un moyen interne à chaque vérin, de façon à réguler la pression de serrage sur ladite surface extérieure.

4. Procédé selon l'une des revendications précédentes, dans lequel, certaines au moins des mesures géométriques sont réalisées par rapport à un marquage formant référence angulaire, on mesure un décalage angulaire dudit marquage de chacun du premier et du second tube par rapport à un plan de référence-machine, avant de piloter chaque vérin (1,2) individuellement en fonction des décalages angulaires.

5. Procédé selon l'une quelconque des revendications précédentes, dans lequel on utilise des vérins (1,2) hydrauliques.

6. Procédé selon l'une quelconque des revendications précédentes, dans lequel on utilise des vérins (1,2) électriques.

7. Procédé selon l'une des revendications précédentes, dans lequel, les positions relatives des vérins (1,2) sont déterminées sur la base d'un calcul des diamètres extérieurs à partir de mesures de diamètres intérieurs et d'épaisseurs correspondantes.

8. Dispositif pour la mise en oeuvre du procédé selon l'une des revendications précédentes, comprenant plusieurs vérins (1,2) montés sur des flasques annulaires (10,20) et orientés radialement par rapport à ceux-ci, **caracterisé par** un automate programmable apte à mémoriser des mesures géométriques relatives à des mesures dimensionnelles et/ou de positionnement d'un premier et d'un deuxième tube, l'automate étant programmé pour commander les déplacements de chacun desdits vérins (1,2) de telle sorte qu'une mise en concordance mutuelle des surfaces intérieures desdits tubes soit réalisée au voisinage de leurs extrémités respectives.

9. Dispositif d'alignement selon la revendication 8, dans lequel les vérins (1,2) comprennent des vérins hydrauliques.

10. Dispositif d'alignement selon l'une des revendications 8 et 9, dans lequel les vérins (1,2) comprennent des vérins électriques.

11. Dispositif d'alignement selon l'une des revendications 8 à 10, dans lequel cinq vérins (1,2) sont montés sur chaque flasque (10,20), angulairement régulièrement répartis de manière angulaire.

## Patentansprüche

1. Verfahren zur gegenseitigen Positionierung einer ersten Rohrleitung und einer zweiten Rohrleitung, bei dem eine erste Anordnung von Stellgliedern(1), die um die erste Rohrleitung verteilt angeordnet sind, und eine zweite Anordnung von Stellgliedern (2), die um die zweite Rohrleitung angeordnet sind, verwendet werden, wobei die Stellglieder (1,2) der ersten Anordnung und der zweiten Anordnung unabhängig voneinander gesteuert werden können,
**dadurch gekennzeichnet, dass**, nachdem zuvor eine Mehrzahl von geometrischen Messungen des Innendurchmessers und der Dicke und/oder des Außendurchmessers in der Nähe der Enden einer jeden der ersten und zweiten Rohrleitungen durchgeführt worden sind, die Stellglieder (1) der ersten Anordnung und die Stellglieder (2) der zweiten Anordnung gemeinsam bis zu einer Relativposition gesteuert werden, die mit Hilfe wenigstens bestimmter der geometrischen Messungen derart bestimmt wird, dass die Innenflächen der ersten und der zweiten Rohrleitungen in gegenseitiger Übereinstimmung in der Nähe der jeweiligen Enden dieser Rohrleitungen angeordnet sind.

2. Verfahren nach Anspruch 1, bei dem jedes Stellglied (1,2) gesteuert wird, um eine Annäherung der Außenfläche zu erzielen, indem ein Bewegungssensor verwendet wird.

3. Verfahren nach einem der Ansprüche 1 und 2, bei dem mindestens bestimmte der Stellglieder (1, 2) so gesteuert werden, dass sie ein Einspannen auf der Außenfläche der ersten oder der zweiten Rohrleitung sicherstellen, mit Hilfe mindestens eines inneren Mittels eines jeden Stellgliedes, derart, dass der Spanndruck auf der Außenfläche geregelt wird.

4. Verfahren nach einem der vorstehenden Ansprüche, bei dem mindestens bestimmte geometrische Messungen durchgeführt werden relativ zu einer Markierung, die eine Winkelreferenz bildet, wobei eine Winkelversetzung der Markierung einer jeden der ersten und der zweiten Rohrleitungen relativ zu einer Bezugsebene der Maschine gemessen wird, bevor jedes Stellglied (1, 2) einzeln in Abhängigkeit von Winkelversetzungen gesteuert wird.

5. Verfahren nach einem der vorstehenden Ansprüche, bei dem Hydraulikzylinder (1, 2) verwendet werden.

6. Verfahren nach einem der vorstehenden Ansprüche, bei dem elektrische Spindeln (1, 2) verwendet werden.

7. Verfahren nach einem der vorstehenden Ansprüche, bei dem die Relativpositionen der Stellglieder (1, 2) auf der Grundlage einer Berechnung von Außendurchmessern ausgehend von Messungen von Innendurchmessern und entsprechender Dicken bestimmt werden.

8. Vorrichtung zur Durchführung des Verfahrens nach einem der vorstehenden Ansprüche mit mehreren Stellgliedern (1, 2), die auf Ringflanschen montiert und radial bezüglich dieser angeordnet sind, **gekennzeichnet durch** einen programmierbaren Automaten, der geometrische Messungen bezüglich dimensioneller Messungen und/oder bezüglich der Positionierung einer ersten und einer zweiten Rohrleitung speichern kann, wobei der Automat zur Steuerung der Bewegungen eines jeden der Stellglieder (1, 2) derart programmiert ist, dass ein gegenseitiges In-Übereinstimmung-Bringen der Innenflächen der Rohre in der Nähe ihrer jeweiligen Enden ausgeführt wird.

9. Ausrichtungsvorrichtung nach Anspruch 8, bei der die Stellglieder (1, 2) Hydraulikzylinder aufweisen.

10. Ausrichtungsvorrichtung nach einem der Ansprüche 8 und 9, bei der die Stellglieder (1, 2) elektrische Spindeln aufweisen.

11. Ausrichtungsvorrichtung nach einem der Ansprüche 8 bis 10, bei der fünf Stellglieder (1,2) auf jedem Ringflansch (10, 20) winkelmäßig gleichmäßig verteilt montiert sind.

## Claims

1. A method for mutually positioning a first pipe and a second pipe, in which a first set of jacks (1) distributed about the first pipe and a second set of jacks (2) distributed about the second pipe are used, the jacks (1, 2) of the first set and the second set being capable of being controlled independently of each other, **characterized in that**, with a plurality of geometric measurements of the internal diameter and the thickness and/or external diameter having previously been made in the vicinity of the ends of each of the first and second pipe, the jacks (1) of the first set and the jacks (2) of the second set are jointly guided to a relative position determined with the aid of at least certain of the geometric measurements in a manner such that the internal surfaces of the first and second pipes are positioned in mutual alignment in the vicinity of the respective ends of these pipes.

2. The method according to claim 1, in which each jack (1, 2) is controlled by means of a displacement sensor in order to approach the external surface.

3. The method according to claim 1 or claim 2, in which at least certain of the jacks (1, 2) are controlled so as to ensure clamping over the external surface of the first or second pipe by means of at least one means inside each jack, so as to regulate the clamping pressure over said external surface.

4. The method according to one of the preceding claims, in which at least certain of the geometric measurements are made with respect to a mark forming an angular reference point, an angular offset of said mark from each of the first and the second pipe with respect to a machine reference plane being measured before guiding each jack (1, 2) individually as a function of the angular offsets.

5. The method according to one of the preceding claims, in which hydraulic jacks (1, 2) are used.

6. The method according to one of the preceding claims, in which electric jacks (1, 2) are used.

7. The method according to one of the preceding claims, in which the relative positions of the jacks (1, 2) are determined on the basis of a computation of the external diameters from measurements of the internal diameters and corresponding thicknesses.

8. A device for carrying out the method according to one of the preceding claims, comprising a plurality of jacks (1, 2) mounted on annular flanges (10, 20) and orientated radially with respect thereto, **characterized by** a programmable logic controller which is capable of memorizing geometric measurements relative to dimensional measurements and/or positional measurements of a first and a second pipe, the logic controller being programmed to control the displacements of each of said jacks (1, 2) such that the internal surfaces of said pipes are brought into mutual alignment in the vicinity of their respective ends.

9. The alignment device according to claim 8, in which the jacks (1, 2) comprise hydraulic jacks.

10. The alignment device according to claim 8 or claim 9, in which the jacks (1, 2) comprise electric jacks.

11. The alignment device according to one of claims 8 to 10, in which five jacks (1, 2) are mounted on each flange (10, 20) at angles distributed in a regular angular manner.
